# EUROPEAN PATENT APPLICATION

(11) **EP 4 052 923 A1**
(43) Date of publication of application: **07.09.2022**
(21) Application number: 20881644.7
(22) Date of filing: 27.02.2020
(51) Int. Cl.: B60B 21/02, B60B 21/10, B21D 53/30

(54) **METHOD FOR MANUFACTURING ONE-PIECE WHEEL HAVING HOLLOW STRUCTURE FOR REDUCING NOISE, AND ONE-PIECE WHEEL USING SAME**

(30) Priority: 31.10.2019 KR 20190137282
(71) Applicant: Hands Corporation Ltd., Incheon 22836 (KR)
(72) Inventor: KIM, Young Sik, Incheon 22778 (KR); PARK, Byoung Ok, Incheon 22129 (KR)
(74) Representative: Morrall, Jonathan Ian McLachlan
(86) International application number: PCT/KR2020/002795
(87) International publication number: WO 2021/085753

(57) **Abstract**

The present disclosure provides a method of manufacturing a one-piece wheel having a hollow structure for noise reduction. At least one embodiment of the present disclosure provides a method of manufacturing a one-piece wheel having a hollow structure for noise reduction, the method comprising: fabricating, by using one or both of gravity casting and low-pressure casting, an integral casting in which a disk portion and a wheel rim portion are integrally formed, wherein the rim portion includes an annular protrusion radially protruding from an outer circumferential surface; forming at least one cavity by bending the annular protrusion through flow forming to provide a bending portion, resulting in the cavity using the bending portion and one side of the disk portion; and performing a friction stir welding between the one side of the disk portion and one end of the bending portion.

## Description

### [Technical Field]

The present disclosure in some embodiments relates to a method of manufacturing a one-piece wheel having a hollow structure for reducing noise, and a one-piece wheel manufactured through the same method.

### [Background]

The statements in this section merely provide background information related to the present disclosure and do not necessarily constitute prior art.

Vehicle wheels, in general, may be structurally divided into one-piece, two-piece, and three-piece wheels.

A one-piece wheel is manufactured by casting a rim and a disk through a mold in one mass. The one-piece wheel has the advantage of easy manufacturability and easy retention of rigidity with a little variation in quality.

A two-piece wheel is manufactured by making a rim and a disk separately, or by making a separate outer rim and then welding or bolting the relevant pieces together. Since the two-piece wheel is manufactured by separating some components, various materials and manufacturing methods can be applied to each piece. Accordingly, the two-piece wheel can be designed in a variety of ways and reduced in weight.

A three-piece wheel is manufactured by separately making an outer rim, an inner rim, and a disk, fastening them with bolts, and assembling them. The three-piece wheel may be divided into a sandwich type, an overhand type, an underhand type, and the like by assembly method. Since the three-piece wheel allows rims or disks to be replaceable, it can be installed in different car models, and it can be designed for a variety of stylish and lightweight products.

However, the two-piece wheel and the three-piece wheel require a separate rim, disk, and others to be fabricated and the subsequent attachment process between separate pieces, which is disadvantageous compared to the one-piece wheel in terms of manufacturability.

Conventional technology is known to provide two-piece and three-piece wheels with a flange and a hollow structure combined between a disk and a rim, allowing the hollow structure to function as a resonator.

However, the conventionally used laser welding to form such a hollow structure generates a large amount of heat to affect the weld, deteriorating the durability and reliability of the wheel product at the weld.

### [Disclosure]

### [Technical Problem]

The present disclosure in some embodiments seeks to provide a method of easily manufacturing a one-piece wheel having a hollow structure for noise reduction.

Further, the present disclosure in some embodiments aims to provide a method of manufacturing a one-piece wheel capable of improving the durability and reliability of welds with minimized thermal effect.

### [Summary]

At least one aspect of the present disclosure provides a method of manufacturing a one-piece wheel having a hollow structure for noise reduction, the method comprising: fabricating, by using one or both of gravity casting and low-pressure casting, an integral casting in which a disk portion and a wheel rim portion are integrally formed, wherein the rim portion includes an annular protrusion radially protruding from an outer circumferential surface; forming at least one cavity by bending the annular protrusion through flow forming to provide a bending portion, resulting in the cavity using the bending portion and one side of the disk portion; and performing a friction stir welding between the one side of the disk portion and one end of the bending portion.

### [Advantageous Effects]

As described above, present disclosure in some embodiments can provide a method of easily manufacturing a one-piece wheel having a hollow structure for noise reduction.

Further, the present disclosure in some embodiments can provide a method of manufacturing a one-piece wheel capable of improving the durability and reliability of welds with minimized thermal effect.

### [Brief Description of the Drawings]

FIG. 1 is a flowchart of a method of manufacturing a one-piece wheel having a hollow structure for noise reduction according to at least one embodiment of the present disclosure.
FIG. 2 is a cross-sectional view showing a cavity forming step according to at least one embodiment of the present disclosure.
FIG. 3 is a cross-sectional view showing a wheel-rim flow forming step according to at least one embodiment of the present disclosure.
FIG. 4 is a cross-sectional view showing a friction stir welding step according to at least one embodiment of the present disclosure.

### REFERENCE NUMERALS

| | | | |
|---|---|---|---|
| 10: | disc part | 11: | hub |
| 13: | spoke | 15: | flange |
| 17: | connection | 20: | wheel rim portion |
| 27: | junction | 29: | resonance hole |
| 30: | cavity | 50: | friction stir welding tool |

### [Detailed Description]

Hereinafter, some embodiments of the present disclosure will be described in detail with reference to the accompanying drawings. In the following description, like reference numerals preferably designate like elements, although the elements are shown in different drawings. Further, in the following description of some embodiments, a detailed description of related known components and functions when considered to obscure the subject of the present disclosure will be omitted for the purpose of clarity and for brevity.

Additionally, alphanumeric code such as first, second, i), ii), (a), (b), etc., in numbering components are used solely for the purpose of differentiating one component from the other but not to imply or suggest the substances, the order or sequence of the components. Throughout this specification, when a part "includes" or "comprises" a component, the part is meant to further include other components, not excluding thereof unless there is a particular description contrary thereto.

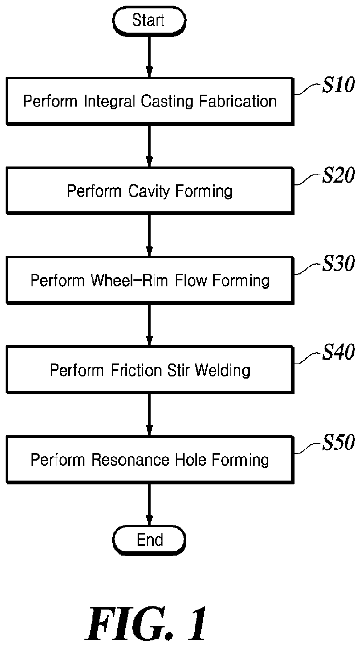

FIG. 1 is a flowchart illustrating a method of manufacturing a one-piece wheel having a hollow structure for noise reduction according to at least one embodiment of the present disclosure.

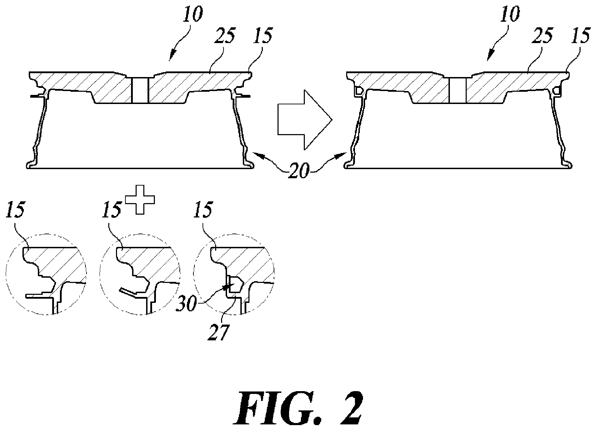

FIG. 2 is a cross-sectional view showing a cavity forming step (S20) according to at least one embodiment of the present disclosure.

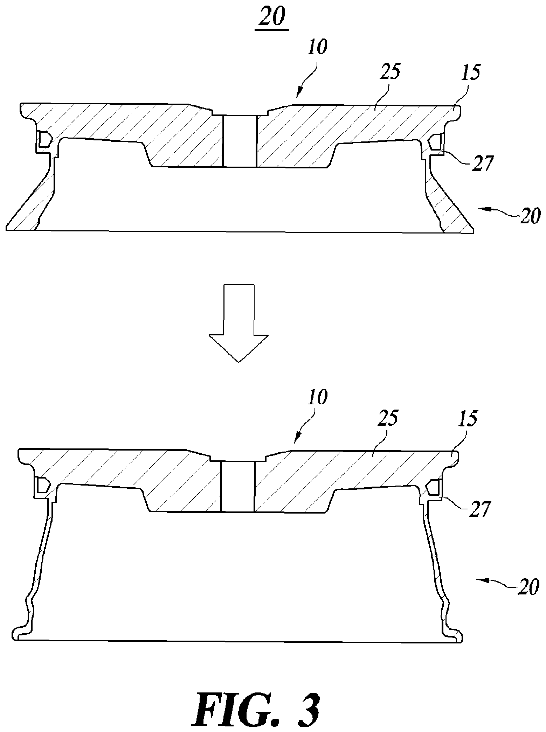

FIG. 3 is a cross-sectional view showing a wheel-rim flow forming step (S30) according to at least one embodiment of the present disclosure.

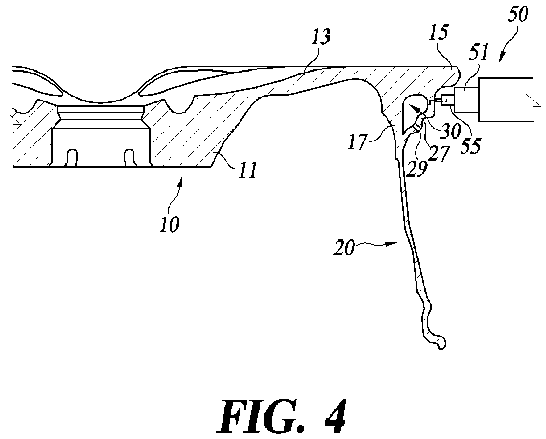

FIG. 4 is a cross-sectional view showing a friction stir welding step according to at least one embodiment of the present disclosure.

The present disclosure provides a method including an integral casting fabrication step (S10), cavity-forming step (S20), cavity-forming step (S20), wheel-rim flow forming step (S30), friction stir welding step (S40), and resonance hole forming step (S50), as shown in FIGS. 1 to 4.

Initially, the integral casting fabrication step (S10) utilizes the gravity casting method for producing an integral casting. The integral casting may include a disk portion 10, a wheel rim portion 20, and an annular protrusion projecting radially of the wheel rim portion 20.

The disk portion 10 may include a hub 11 to be coupled to a vehicle body, a flange 15 spaced apart from the hub 11 in radial directions, and spokes 13 for interconnecting the hub 11 and the flange 15.

The spokes 13 may be disposed at equal intervals circumferentially of the hub 11, although the present disclosure is not limited to such a configuration.

The annular protrusion formed on the wheel rim portion 20 may be bent in the flow forming step, thereby forming at least one cavity 30.

The integral casting is preferably manufactured through a low-pressure casting method or a gravity casting method.

Specifically, with the low-pressure casting method, a relatively low pressure (0.05 ~ 0.8 kg/cm²) is applied through a gas body to the molten surface of enclosed molten metal which is then pushed up against the gravity through a riser tube right into the upper casting mold.

When manufactured by the low-pressure casting method, the integral casting has relatively few wrinkles and no incorporation of slag, advantageously providing a dense and beautiful appearance.

The gravity casting method arranges molten metal to be injected to fill a mold by gravity while tilting the mold 90 degrees to fabricate a casting.

When manufactured by the gravity casting with a directional solidification design made available, the integral casting can get an improved weight reduction design at the rear surface of wheel spokes, leading to a reduced weight of the wheel.

Moreover, the gravity casting method provides an advantage of improving the mechanical properties of the casting through the rapid cooling of the disk portion, thereby fabricating the casting of high durability.

The method of manufacturing a one-piece wheel having a hollow structure according to at least one embodiment of the present disclosure features utilizing an integral casting in which the disk portion 10 and the wheel rim portion 20 are integrally manufactured.

Such an integral casting can omit or simplify the casting process, the machining process, the welding process, etc., in comparison with the two-piece to three-piece hollow wheel manufacturing process, thereby lowering the manufacturing cost and shortening the manufacturing time. Further, the integral casting has the effect of reducing the defect rate through process simplification.

Meanwhile, the mold used in manufacturing the integral casting may include an upper mold, a lower mold, and side molds. In this configuration, the side molds may include, but not limited to, four slide sides spaced apart at intervals of 90 degrees.

Secondly, the cavity-forming step (S20) is performed by bending the annular protrusion projecting radially of the wheel rim portion to provide a bending portion, causing the cavity 30 to be established with the bending portion conjoining to one side of the disk portion 10.

In particular, upon separating the integral casting from the relevant casting machine, the present disclosure may use a horizontal roller to bend the annular protrusion through flow forming and thereby form the cavity.

Thirdly, the wheel-rim flow forming step (S30) is performed by contouring the wheel rim portion 20 of the integral casting upon completion, coupled with further strengthening the wheel rim portion 20.

The flow forming of the wheel rim portion is preferably made after flow forming the cavity, although the present disclosure is not limited to that sequence. For example, the flow forming of the cavity may be performed after the flow forming of the wheel rim portion.

The flow forming in the above-described steps (S20, S30) may use a known method of consecutive forming performed on the wheel rim portion 20 with a mandrel (not shown), a rotary pressure chuck (not shown), and a horizontal roller (not shown), etc.

The above-described flow-forming steps (S20 and S30) may be preceded by preheating the target portions of the flow-forming to better perform thereof.

Some embodiments include pre-processing an inner surface of the wheel rim portion 20 toward a precise measurement of the inner surface.

Fourthly, the friction stir welding step (S40) follows the bending of the annular protrusion into the cavity 30 by performing a friction stir welding between the disk portion 10 and the outer periphery of the bending portion with a friction stir welding tool 50 while the disk portion 10 and the outer periphery of the bending portion remain in close contact with each other.

In particular, friction stir welding may be performed so that one end of the bending portion is joined to one side of the disk portion 10.

The friction stir welding tool 50 is preferably composed of a welding tool 51 that rotates and an elevatable pin 55 that is coupled to the center of the welding tool 51 and is formed to protrude downward. The elevatable pin 55 may be configured to operate by ascending and descending through a conventional cylinder (not shown).

For friction stir welding between one side of the disk portion 10 and one end of the bending portion, the present disclosure moves the welding tool 51 rotating at high speed to forcefully bring the end of the elevatable pin 55 to contact the adjoining surfaces of or a weld between the disk portion 10 and the bending portion.

Here, the elevatable pin 55 coupled to the welding tool 51 rotates while being inserted into the adjoining surfaces where the plastic flow of the material occurs due to frictional heat, resulting in solid-state bonding between the disk portion 10 and the bending portion.

Thereafter, with a rotation of the disk portion 10 and the bending portion, the weld can be automatically made by the friction stir welding tool 50 along the adjoining surfaces.

The friction stir welding may be completed at the point where the disk portion 10 and the bending portion rotate 360 degrees. At this time, through the ascending operation of the elevatable pins 55, the elevatable pin 55 may depart from the weld at the point where the friction stir welding is completed.

This can prevent an end hole from being formed on the weld between the disk portion 10 and the bending portion, which can minimize the affected area due to heat, thereby securing the durability and reliability of the wheel.

Additionally, after the friction stir welding step (S40) is achieved, the present disclosure may perform the formation of lug holes (not shown) for coupling the manufactured wheel to a vehicle body, heat treatment, painting, and inspection.

Between the steps of heat treatment, painting and inspection, the present disclosure may perform an additional process over the entire surface of the disk portion 10.

Fifth, the resonance hole forming step (S50) is performed by forming a plurality of resonance holes 29 in a junction 27 of the wheel rim portion 20 to improve the noise, vibration, harshness (NVH), that is, road noise of the wheel to be manufactured.

The resonance holes 29 may be formed in various numbers to obtain a noise reduction effect in a wide range of resonance frequency bands by adjusting the volume of the cavity 30.

For example, four resonance holes 29 may be formed at equal intervals. The four resonance holes 29 formed in the cavity are each preferably arranged at the middle point of each cavity 30 to obtain an excellent noise reduction effect.

Where there are four resonance holes 29, the cavity 30 may be quadrisected circumferentially of the wheel rim portion 20, each divided cavity 30 having one resonance hole 29.

The wheel rim portion 20 may include partition protrusions (not shown) for serving as a boundary between one cavity 30 and the adjacent cavity 30. The partitioning protrusions may be in close contact with the junction 27 to easily partition the cavities 30.

The partition protrusions for forming the multiple cavities 30 are preferably arranged at different intervals on the outer periphery of a connection 17 so that the cavities 30 partitioned by the partition protrusions each have a different volume. This allows the cavities 30 to each have a different resonant frequency thanks to its different volume, and thus, the wheel configuration can achieve a noise reduction effect in a wider resonant frequency band.

Through the resonance hole forming step (S50), the cavity 30 and the resonance hole 29 may function as one Helmholtz resonator. Accordingly, the one-piece wheel having a hollow structure according to the present disclosure has the effect of effectively reducing road noise without a separate device for noise reduction.

Although FIG. 1 shows the friction stir welding step (S40) preceding the resonance hole forming step (S50), the present disclosure is not so limited. For example, the friction stir welding step (S40) may be performed after the resonance hole forming step (S50).

Since the method of manufacturing a one-piece wheel having a hollow structure according to the present disclosure employs a friction stir welding method rather than a conventional laser welding method, the thermal effect is minimized on the weld between the disk portion 10 and the wheel rim portion 20 is minimized, thereby advantageously securing the durability and reliability of the weld.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the embodiments of the present disclosure is not limited by the illustrations. Accordingly, one of ordinary skill would understand the scope of the claimed invention is not to be limited by the above explicitly described embodiments but by the claims and equivalents thereof.

### CROSS-REFERENCE TO RELATED APPLICATION

This application claims priority from Korean Patent Application No. 10-2019-0137282 filed on October 31, 2019, the disclosure of which is incorporated by reference herein in its entirety.

## Claims

1. A method of manufacturing a one-piece wheel having a hollow structure for noise reduction, the method comprising:
fabricating, by using one or both of gravity casting and low-pressure casting, an integral casting in which a disk portion and a wheel rim portion are integrally formed, wherein the rim portion includes an annular protrusion radially protruding from an outer circumferential surface;
forming at least one cavity by bending the annular protrusion through flow forming to provide a bending portion, resulting in the cavity using the bending portion and one side of the disk portion; and
performing a friction stir welding between the one side of the disk portion and one end of the bending portion.

2. The method of claim 1, further comprising:
flow forming the wheel rim portion, between the forming of the cavity and the performing of the friction stir welding.

3. The method of claim 2, further comprising:
forming one or more resonance holes in the cavity, between the flow-forming of the wheel rim portion and the performing of the friction stir welding, or after the performing of the friction stir welding.

4. The method of claim 3, wherein the resonance holes are each formed on each cavity.

5. The method of claim 1, wherein the cavity is partitioned by partition protrusions into multiple cavities that are adjacent to each other.

6. The method of claim 5, wherein the cavities partitioned by the partition protrusions each have a different volume from other cavities.

7. The method of claim 1, wherein the performing of the friction stir welding com prises:
performing the friction stir welding between the one side of the disk portion and one end of the bending portion by utilizing a friction stir welding tool including a welding tool that rotates and an elevatable pin disposed on one side of the welding tool and configured to move up and down with respect to the welding tool.

8. The method of claim 2, further comprising:
before the flow forming of the wheel rim portion, preheating the wheel rim portion.

9. The method of claim 2, further comprising:
before the flow forming of the wheel rim portion, pre-processing an inner surface of the wheel rim portion.

10. A one-piece wheel manufactured through the method of manufacturing a one-piece wheel according to any one of claims 1 to 9.
